Europäisches Patentamt

(19) **European Patent Office**

Office européen des brevets

(11) Numéro de publication: **0 069 021**
**B1**

(12) # FASCICULE DE BREVET EUROPEEN

(45) Date de publication du fascicule du brevet:
29.05.85

(51) Int. Cl.⁴: **E 06 B 3/66,** C 03 C 27/12

(21) Numéro de dépôt: **82401208.2**

(22) Date de dépôt: **29.06.82**

(54) **Procédé de fabrication d'un vitrage isolant avec protection des arêtes sur le pourtout, dispositif destiné à la mise en oeuvre du procédé, et vitrage fabriqué selon le procédé.**

(30) Priorité: **29.06.81 DE 3125478**
**20.10.81 DE 3141482**

(43) Date de publication de la demande:
**05.01.83 Bulletin 83/1**

(45) Mention de la délivrance du brevet:
**29.05.85 Bulletin 85/22**

(84) Etats contractants désignés:
**AT BE DE FR GB IT SE**

(56) Documents cités:
**DE - A - 2 324 241**
**DE - A - 2 415 707**
**DE - U - 6 750 551**
**GB - A - 1 447 941**
**GB - A - 2 016 960**
**US - A - 3 772 843**

(73) Titulaire: **SAINT-GOBAIN VITRAGE, Les Miroirs 18, avenue d'Alsace, F-92400 Courbevoie (FR)**

(84) Etats contractants désignés: **BE FR GB IT SE AT**

(73) Titulaire: **VEGLA Vereinigte Glaswerke GmbH, Viktoria Allee 3-5, D-5100 Aachen (DE)**

(84) Etats contractants désignés: **DE**

(72) Inventeur: **Gemeinböck, Gerhard, Anton-Sattlergasse 115/17/23, A-1222 Wien (AT)**
Inventeur: **Lupp, Bernd-Dietmar, Laarkamp 31, D-4630 Bochum (DE)**
Inventeur: **Muchel, Peter, In den Benden 18, D-5160 Düren (DE)**
Inventeur: **Peetz, Dieter, Freiherrenstrasse 12, D-5100 Aachen (DE)**
Inventeur: **Schallenberg, Andreas, Rezagstrasse 1a, D-5000 Köln 90 (DE)**
Inventeur: **Scheeren, Peter, Friedrichstrasse, D-5102 Würselen (DE)**
Inventeur: **Sistig, Helmut, Mittelstrasse 12, D-5100 Aachen (DE)**
Inventeur: **Werner, Rudolf, Hofzelle 10-12/8/9, A-1190 Wien (AT)**

(74) Mandataire: **de Toytot, Robert et al, SAINT-GOBAIN RECHERCHE 39 quai Lucien Lefranc, F-93300 Aubervilliers (FR)**

## Description

La présente invention concerne la protection des arêtes des vitrages isolants et plus particulièrement, des vitrages multiples constitués par au moins deux feuilles de verre assemblées avec interposition à leur périphérie d'une cale d'espacement ménageant un espace intercalaire entre les faces internes desdites feuilles.

On sait que, afin de réduire les risques de condensation à l'intérieur dudit espace, et ceux de dégradation de la transparence du vitrage, un produit desséchant est généralement mis en contact avec l'atmosphère dudit espace. Le plus souvent, ce produit est contenu soit dans un profilé creux servant de cale d'espacement et ouvert vers ledit espace, soit dans un cordon de matière plastique disposé à la périphérie dudit espace. Un joint d'étanchéité vient ensuite isoler ledit espace, et le produit desséchant lui-même, de l'atmosphère extérieure.

La cohésion de l'ensemble est obtenue généralement à l'aide soit d'un cadre métallique externe pinçant les faces externes des feuilles du vitrage, soit d'un cordon de scellement externe de matière plastique très adhésive, telle que polysulfure, disposé dans la gorge formée par la surface externe de la cale d'espacement, ou du jount d'étanchéité, et les faces internes des feuilles de verre.

Dans ce dernier cas, il est souhaitable et usuel, pour éviter la dégradation des chants du vitrage, et par conséquent des qualités d'étanchéité du joint, de munir la périphérie du vitrage d'une garniture de protection des arêtes.

Selon un procédé courant, cette garniture est constituée d'un profilé extrudé, en matière plastique, qui est, après polymérisation complète, collé sur la tranche du vitrage.

Suivant une autre méthode, connue par le DE-U-1 758 724, la protection des arêtes est obtenue à l'occasion de l'opération d'application du joint assurant le collage des feuilles de verre, et éventuellement l'étanchéité de l'espace intercalaire, en une seule et même étape: la pâte de matière plastique utilisée pour constituer le joint de collage est appliquée de manière à déborder de la gorge jouxtant la cale d'espacement jusqu'à atteindre les faces externes des feuilles de verre, et à noyer ainsi complètement les chants périphériques desdites feuilles.

De même, suivant la méthode connue par le brevet DE-A-2 324 241, l'étanchéité et la protection des arêtes sont obtenues en une seule et même opération: après collage mutuel des feuilles de verre, la tranche du vitrage est plongée dans une pâte constituée de résine polyester, à une température de 70° C.

Ces divers procédés présentent l'inconvénient de conduire à l'obtention d'une garniture de protection d'aspect mal contrôlé et de dimensions non régulières.

Le procédé du brevet DE-A-2 415 707 obvie à cet inconvénient par la mise en place, sur les faces externes du vitrage isolant, de deux gabarits s'étendant légèrement au-delà de la périphérie desdites faces, et d'un listel s'appliquant sur le chant intérieur desdits gabarits, qui ainsi, respectivement, prolongent et ferme la gorge constituée par les faces internes des deux vitres individuelles et par la cale d'espacement. La cavité de section calibrée ainsi définie est ensuite emplie d'une matière plastique liquide, par un orifice situé au point bas de ladite cavité, de manière à éviter la formation de poches d'air, ainsi que le montrent les figures 1 et 2 du brevet.

La mise en oeuvre d'un tel procédé est coûteuse, car elle exige beaucoup de soin et de temps pour la mise en place des pièces mobiles constituant la cavité, suffisamment précise pour garantir son étanchéité, pour son remplissage par la matière plastique liquide, et pour le durcissement de ladite matière plastique.

Par ailleurs, le souci d'assurer l'étanchéité de la cavité conduit à exercer des efforts importants sur les gabarits pour les appliquer sur les faces externes des feuilles de verre, ce qui risque de déformer la cale intercalaire, et par conséquent d'affecter l'étanchéité du vitrage lui-même, et par conséquent sa tenue dans le temps.

La présente invention vise à remédier à ces divers inconvénients et à proposer un procédé d'une mise en oeuvre à la fois simple, rapide et fiable.

Elle permet d'obtenir un vitrage isolant dont la garniture de protection des arêtes, faisant corps avec le joint de collage des feuilles de verre, présente une section uniforme tout au long de sa périphérie, ou tout au moins une section dont le profil varie de façon maîtrisée, de telle manière qu'elle présente un aspect, et procure une commodité de montage de vitrage, au moins comparables à ceux des garnitures constituées d'un profilé extrudé.

La présente invention a pour objet un procédé de fabrication d'un vitrage isolant muni d'une garniture de protection des arêtes sur son pourtour, du type selon lequel une matière plastique injectable et durcissable est appliquée en même temps dans la gorge constituée par les faces internes des deux vitres individuelles et par la cale d'espacement et, extérieurement, tout autour de la tranche marginale du vitrage isolant, grâce à la mise en place, sur les faces externes du vitrage isolant, de deux gabarits s'étendant légèrement au-delà de la périphérie desdites faces, définissant ainsi une cavité de section calibrée, englobant la tranche des feuilles de verre, le remplissage de cette cavité étant effectué par de la matière plastique durcissable, et les gabarits étant retirés le durcissement de la matière plastique, et dans lequel les deux gabarits sont munis an niveau de la périphérie de la face externe de leur feuille de verre homologue, d'un évidement correspondant au contour extérieur souhaité de la garniture de protection des arêtes et le remplissage de la cavité de section calibrée par la matière plastique s'effectue à l'aide d'une buse d'injection obturant la cavité vers l'extérieur, et se déplaçant en prenant appui sur les chants desdits gabarits.

Selon un mode d'exécution particulièrement avantageux, les gabarits appliqués de part d'autre du vitrage présentent un contour périphérique identique, observé en projection sur un plan parallèle aux feuilles de verre, et extérieur au contour desdites feuilles.

Dans une solution particulièrement avantageuse, les gabarits sont constitués d'un matériau transparent, par exemple de verre acrylique, de telle sorte que le remplissage puisse être conduit avec un contrôle visuel permanent en cours d'opération, en évitant les inclusions de bulles ou les débordements.

Selon d'autres modes d'exécution avantageux de l'invention, les gabarits comportent des moyens pour les appliquer très énergiquement sur les faces externes du vitrage. Par exemple, ils peuvent comporter des parties ferro-magnétiques qui permettent une fixation de part et d'autre du vitrage sous l'effet de forces magnétiques.

Un autre moyen, dont un avantage est d'éviter d'écraser la cale intercalaire, qui peut être un cordon de matière plastique quelque peu déformable, consiste à fixer par effet de ventouse les gabarits sur les faces externes du vitrage.

La présente invention a également pour objet, non seulement le procédé, et le dispositif pour le mettre en œuvre, tels qu'ils ont été définis dans la description qui précède et qui sera complétée plus loin par celle d'un exemple d'exécution mettant en évidence certaines caractéristiques complémentaires, mais aussi les vitrages fabriqués par ce procédé.

Une forme d'exécution pour laquelle le procédé de l'invention s'avère particulièrement avantageux est représentée par un vitrage muni d'une garniture de protection des arêtes sur son pourtour, qui est constituée d'une matière plastique conservant son élasticité dans le temps et qui est susceptible de servir de moyen d'étanchéïté lorsque ledit vitrage se trouve inséré dans un chassis, par exemple de fenêtre.

On sait que, fréquemment, les châssis de fenêtres recevant les vitrages se composent, soit de profilés métalliques en forme de U, avec un écartement invariable donné entre les ailes du profilé en U, qui constituent les deux parcloses de maintien du vitrage, soit d'un premier profilé en forme de L, dont l'une des ailes sert de première parclose, avec lequel un second profilé constituant la seconde parclose est solidarisé à intervalles fixes, ou éventuellement à intervalles d'échelonnement choisi. Or, si l'étanchéïté du vitrage vis-à-vis de l'une des deux parcloses est prévue, non pas au moyen d'une pâte d'étanchéïté durcissable, injectée dans l'espace intermédiaire entre la parclose et le vitrage, mais grâce à un profilé d'étanchéïté constitué d'une matière de type caoutchouc, enveloppant le bord de la vitre, le profilé de protection des arêtes entourant le vitrage doit, quant à ses dimensions en épaisseur, etre accordé de façon relativement précise aux dimensions du châssis de fenêtre, c'est-à-dire à l'écartement entre les parcloses, ceci afin que soit garantie la pression d'application nécessaire à l'étanchéïté entre ledit vitrage et lesdites parcloses.

Malheureusement, les procédés connus, décrits plus hauts, de fabrication de vitrages munis d'un élément de protection des arêtes permettent difficilement le respect de tolérances étroites pour les dimensions en section du profilé de protection des arêtes, en particulier dans le cas de vitrages d'isolation, pour lesquels les tolérances sur l'épaisseur du vitrage isolant proprement dit s'ajoutent à celles concernant l'élément de protection des arêtes.

Conformément à l'invention, ce problème se trouve résolu en choisissant une matière plastique conservant une notable élasticité à la prise, pour fabriquer l'élément de protection des arêtes, et en munissant l'une de ses faces, sur lesquelles s'appliquent les parcloses du châssis de fenêtre, de bossages espacés.

Dans cette forme de réalisation de l'élément de protection des arêtes conforme à l'invention, la pression exercée par l'une des parcloses, avantageusement la parclose disposée du côté de l'intérieur du local, n'est transmise que sur ces bossages, qui se laissant déformer avec une relative facilité, même pour un matériau élastique présentant une dureté Shore élevée, en raison de leurs dimensions réduites. On peut donc choisir pour épaisseur de l'élément de protection des arêtes, à l'extérieur desdits bossages, une valeur un peu inférieure à l'épaisseur nominale, et prévoir la hauteur des bossages telles qu'en leurs emplacements l'épaisseur de l'élément de protection des arêtes soit un peu supérieure à la dimension nominale. Les différentes tolérances sur l'épaisseur se trouvent ainsi compensées par la possibilité de déformation des bossages.

Suivant le procédé de l'invention, la formation de tels bossages peut être obtenue en ménageant dans les gabarits des évidements complémentaires localisés qui, lors du remplissage de la cativé périphérique, se trouvent en même temps remplis avec la matière plastique.

Le nombre et les dimensions des bossages se déterminent en fonction des propriétés élastiques du matériau utilisé pour la garniture de protection des arêtes. Si par exemple on utilise des matières plastiques de la nature du caoutchouc, du groupe des alkylpolysulfures, par exemple le produit connu sous la désignation commerciale de THIOKOL, ces bossages sont alors prévus avec des espacements de 10 à 30 cm.

D'autres caractéristiques et avantages de l'invention résultent de la description donnée ci-dessous d'exemples d'exécution en référence aux figures, qui représentent:

figure 1, une vue d'ensemble en perspective, avec coupe partielle, d'un vitrage isolant disposé entre deux gabarits, durant la mise en place de l'agent d'étanchéïté et de collage;

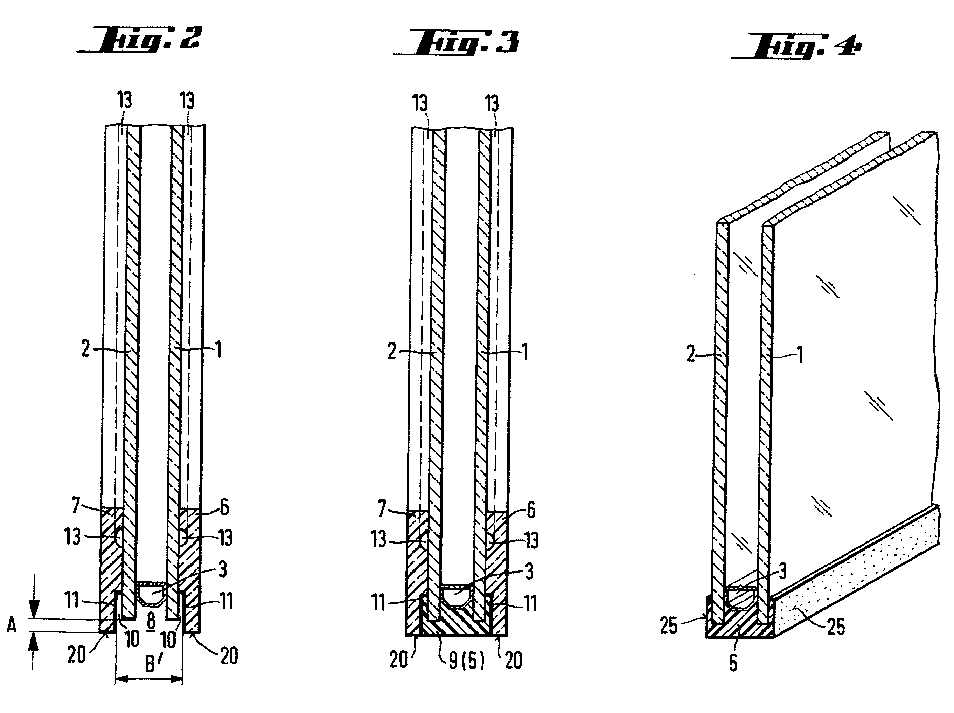

figure 2, une coupe par un plan perpendiculaire au chant du vitrage selon II-II de la figure 1;

figure 3, une coupe par un plan perpendiculaire au chant du vitrage selon III-III de la figure 1;

figure 4, une vue en perspective, partiellement en coupe, d'un vitrage isolant muni d'une garniture de protection d'arêtes;

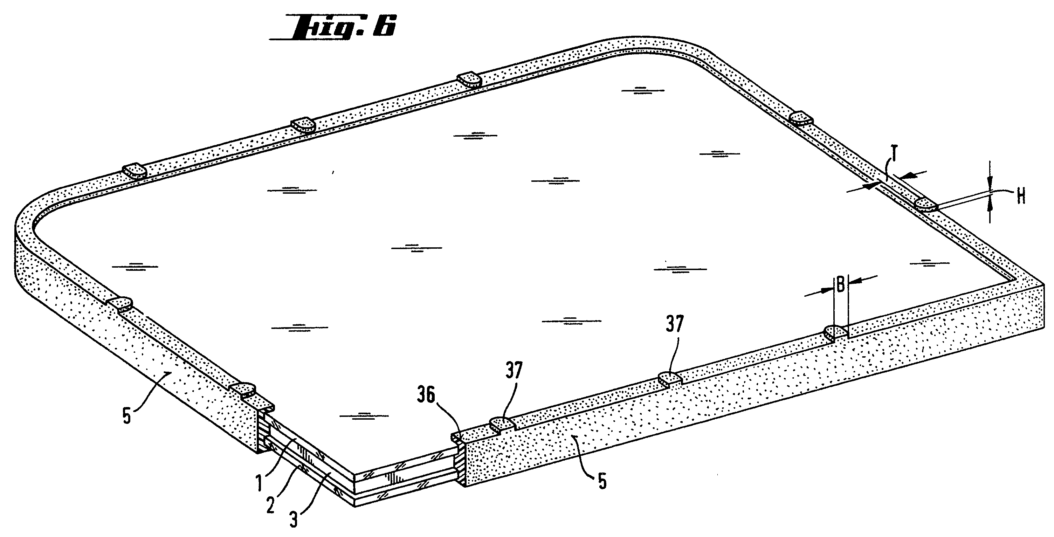

figure 5, une vue en perspective d'une buse d'injection adaptée au remplissage de la cavité;

figure 6, un premier mode de réalisation d'un vitrage isolant muni d'une garniture de protection comportant des bossages selon l'invention, sous forme d'une vue générale en perspective, représentée partiellement en coupe;

figure 7, une coupe partielle, représentée en perspective, d'un autre mode de réalisation selon lequel les bossages se présentent sous la forme de coins;

figure 8, le vitrage isolant représenté à la figure 7, sous forme d'une coupe le long de la ligne VIII-VIII, et

figure 9, le même vitrage isolant conforme à l'invention, après sa mise en place dans un châssis de fenêtre, le tout représenté en coupe partielle.

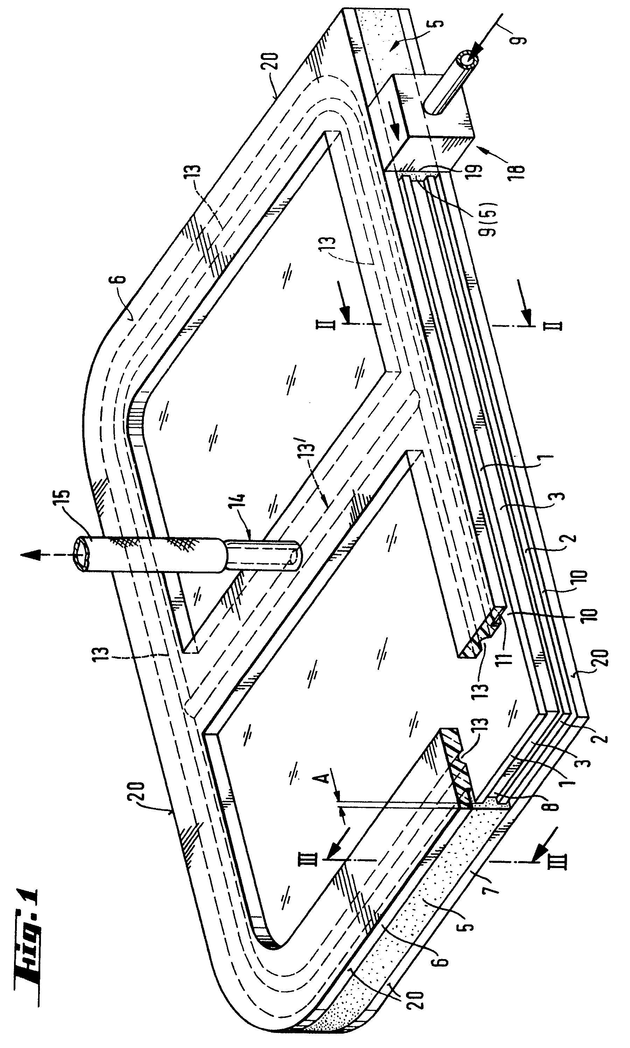

Le vitrage isolant à équiper de la garniture de protection d'arêtes 5 est représenté sur la figure 1 comme constitué de deux vitres individuelles de verre 1 et 2 qui, avec la cale d'espacement 3, sont assemblées en un vitrage unitaire isolant. Avant l'assemblage, il est avantageux de recouvrir d'une couche de butyl la cale d'espacement 3 sur les deux faces qui s'appliquent sur les vitres. De cette façon, lors de l'assemblage et sous l'effet d'une compression consécutive éventuelle, il se produit un collage préalable des vitres individuelles avec la cale d'espacement. En même temps, cette couche de butyl contribue à l'étanchéité du vitrage isolant.

Sur la vitre 1, on applique un gabarit 6, sur la vitre 2, un autre gabarit 7, de manière à constituer sur le bord du vitrage isolant une cavité 8, qui est remplie avec la pâte de matière plastique 9. Les gabarits 6 et 7 sont de dimensions adaptées à celles des vitres individuelles 1 et 2, à savoir un peu supérieures à celles-ci, de sorte que sur tout leur pourtour, ils font saillie, de la distance A, par rapport aux arêtes des vitres. Dans leur zone marginale la plus externe, les gabarits 6 et 7 sont toujours chacun munis, sur la face qui s'applique sur la vitre, d'un évidement 10, ces évidements délimitant des prolongements à la cavité 8. La surface des gabarits 6 et 7 au niveau de l'évidement 10 est munie d'une couche 11 de laque anti-adhésion, qui interdit le collage de la pâte de matière plastique 9 sur les gabarits.

Les gabarits 6 et 7 présentent, sur la surface qui s'applique sur les vitres, un canal 13, qui se développe parallèlement à l'évidement 10 et qui, en passant par le canal de raccordement 13', conduit à l'ajutage de branchement 14, auquel est raccordée une conduite en dépression 15. Lorsque les gabarits 6 et 7 sont disposés sur les surfaces de verre, dès qu'une dépression est établie dans le canal 13, les gabarits 6 et 7 se trouvent appliqués sur les vitres par l'effet de succion.

Les gabarits 6 et 7 sont constitués d'un matériau transparent, par exemple du verre acrylique. La laque de la couche antiadhésion 11 est également, de préférence, choisie transparente. Ainsi, lors du remplissage de la cavité 8 par de la pâte de matière plastique 9, au moyen de la buse d'injection 18, on peut, grâce à la transparence des zones marginales des gabarits 6 et 7 contrôler visuellement que les espaces libres existant entre les gabarits et les surfaces de verre se remplissent avec la pâte de matière plastique dans tout leur volume, sans apparition de lacunes. Au cas où il s'en formerait, on pourrait intervenir aussitôt et les éliminer.

Les gabarits 6 et 7 peuvent être maintenus sur les vitres, non seulement par effet de succion, mais aussi d'autres façons. La fixation temporaire peut s'obtenir par exemple au moyen d'agrafes, qui sont poussées depuis le bord sur les deux gabarits; cependant, de telles agrafes constituent une certaine gêne lors du remplissage de la cavité 8. Un procédé qui a fait aussi ses preuves est la fixation des gabarits 6 et 7 au moyen de forces magnétiques, ce qui peut se réaliser par exemple en disposant des plaques ferro-magnétiques sur la surface du gabarit 6 et en installant l'ensemble de ce montage sur une plaque magnétique. Lorsqu'on instaure le champ magnétique, le gabarit 6 est plaqué avec la pression requise contre les couches qui se trouvent au-dessous.

La buse d'injection 18 comporte une face d'appui constituée d'une surface plane lisse 19, suffisamment large pour pouvoir s'appliquer contre les chants 20 des gabarits 6 et 7, en sorte que ces chants 20 servent de faces de guidage lorsque le dispositif est parcouru par la buse d'injection 18. Sur la buse d'injection 18, sont fixées deux plaques minces de guidage 22, parallèlement l'une à l'autre, avec un écartement B, qui correspond à l'écartement B' entre les surfaces des gabarits 6 et 7 limitant les évidements 10. Ces plaques de guidage servent au centrage de la buse d'injection 18 durant le processus d'injection. Sur la surface 19 débouchent trois canaux 23, 24, à travers lesquels la masse 9 de collage et d'étanchéité, placée sous pression, sort et est chassée dans la cavité 8.

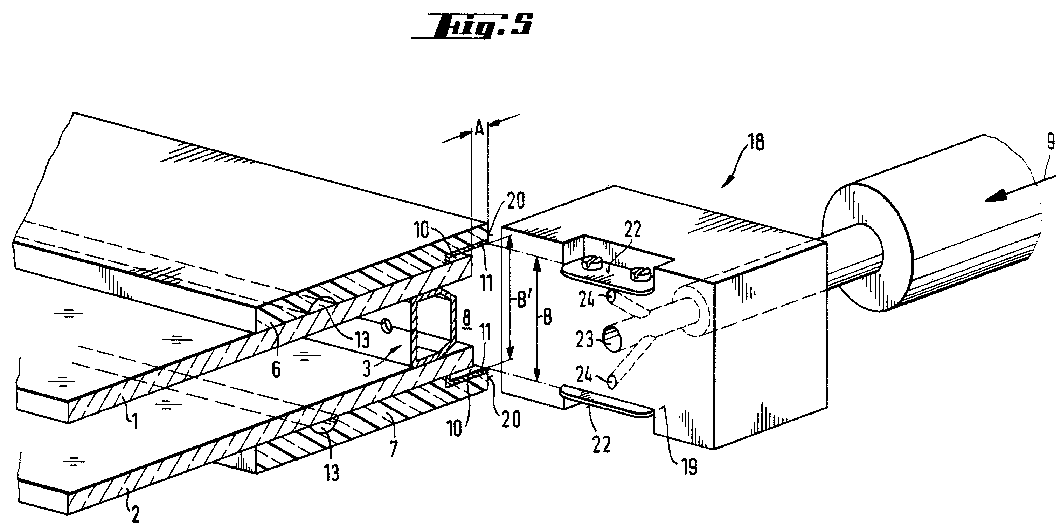

Comme pâte d'étanchéité et de collage, on utilise, de façon particulièrement avantageuse, des matières plastiques de type caoutchouc, du groupe des alkylpolysulfures, tels qu'on les trouve dans le commerce sous la désignation THIOKOL, et tels qu'ils sont employés couramment pour le scellement des vitrages isolants. Aussitôt que la pâte de matière plastique fait prise, les gabarits 6 et 7 sont retirés du vitrage isolant. Le vitrage isolant se trouve alors muni d'un profilé de protection 5 des arêtes sur tout son pourtour, avec des contours extérieurs 25, ainsi qu'il est représenté en coupe sur la figure 4.

Le vitrage isolant enrobé représenté sur la fi-

gure 6 comporte deux vitres élémentaires 1 et 2, qui sont tenues à distance l'une de l'autre par la cale d'espacement 3, constituée d'un profilé creux rempli d'un agent dessicateur. Les dimensions extérieures de la cale d'espacement 3 sont plus faibles que les vitres 1,2. La rainure, ou gorge creuse, formée de cette façon sur le chant du vitrage isolant, par les surfaces internes des vitres 1 et 2, et la surface externe de la cale d'espacement 3, est emplie d'une matière plastique élastique conservant son élasticité dans le temps. Cette matière de scellement entoure en outre les surfaces externes de la zone marginale du vitrage isolant et constitue ainsi une garniture 5 de protection des arêtes.

L'aile 36 de la garniture 5 de protection des arêtes du vitrage isolant représenté à la figure 6 correspond à sa face intérieure, c'est-à-dire la face tournée vers le local; elle présente, le long du contour de la garniture de protection des arêtes 5, à écartements constants, des bossages 37, constitués du même matériau dont est formée ladite garniture 5. De préférence, cette dernière ne forme qu'une seule et même pièce avec bossages 37 et lesdits bossages 37 sont réalisés en ménageant dans l'un des gabarits destinés à servir de moules pour la confection de la garniture de protection des arêtes 5, aux emplacements appropriés, des évidements complémentaires de forme correspondant à l'empreinte desdits bossages qui, lors du remplissage des moules, se remplissent de la pâte de scellement.

Lorsque pour la réalisation de la garniture de protection des arêtes 5, on utilise la pâte de scellement connue sous la désignation commerciale de THIOKOL, les bossages 37 ont une largeur B de 6 à 20 mm environ, et de préférence, de 8 à 10 mm environ. Leur profondeur T correspond à la longueur de l'aile 36 de l'élément de protection des arêtes et leur hauteur H est de 0,5 à 4 mm environ, et de préférence 1 mm environ. La forme de leur surface de base peut parfaitement être quelconque. Dans le cas représenté à la figure 6, elles sont arrondies vers la surface de la vitre et, pour le reste, elles sont délimitées par des arêtes droites; cependant, d'autres formes, correspondant aux exigences du moment, sont naturellement concevables, par exemple les formes hémisphérique, conique, pyramidale, etc.

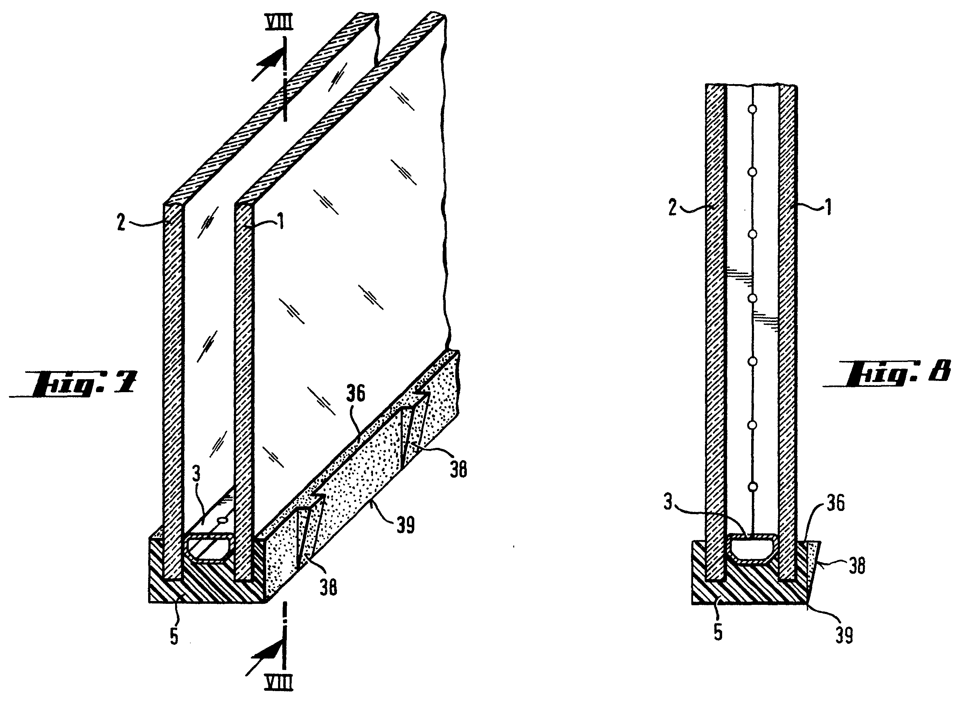

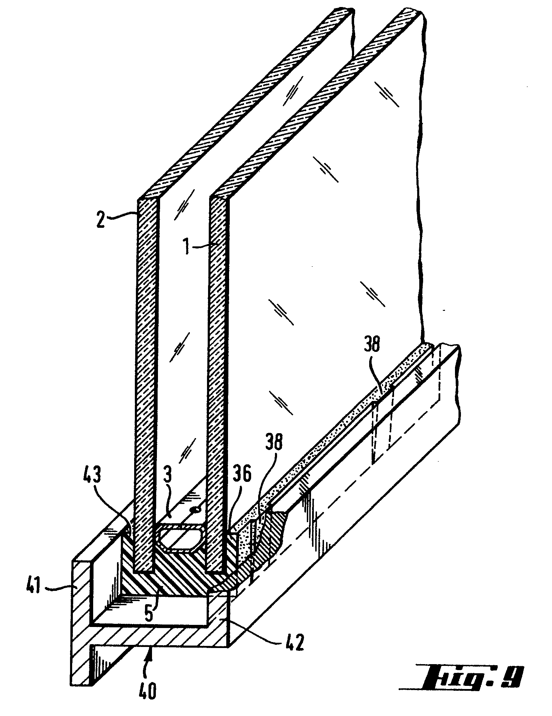

Dans le type d'exécution représenté sur les figures 7 et 8, les bossages 38 ont la forme d'un coin aplati, dont l'arête vers le bas présente un tracé en continuité avec l'arête 39 du profilé de protection des arêtes 5, coin qui s'élargit vers la surface libre de la vitre. Ce type d'exécution facilite la mise en place de la vitre dans un châssis en forme de U.

Sur la figure 9 est représenté un vitrage isolant conforme à l'invention, à l'état monté. Le châssis de fenêtre comporte un profilé métallique 40, pour l'essentiel en forme de U, dont les membrures latérales constituent les parcloses 41 et 42 de maintien du vitrage. La parclose 41 se trouve de préférence placée du côté de l'extérieur du local, et la parclose 42 du côté de l'intérieur. L'étanchéité à l'eau de la fenêtre est obtenue grâce à la pression à laquelle est soumise la surface de l'aile 43 de la garniture 5 d'étanchéité et de protection des arêtes, entre la parclose 41 et la feuille de verre 2. Afin de garantir cette pression, qui est de l'ordre de grandeur de 0,5 à 1 kgf par cm de longueur d'arête de la vitre, il est prévu, sur l'aile opposée 36 de la garniture de protection des arêtes 5, à écartements de 20 à 30 cm, des bossages 38, hauts de 1 mm environ, qui transmettant la pression d'application nécessaire en prenant appui sur la parclose 42. Il est compréhensible que le matériau constituant la garniture de protection des arêtes doit, d'une part, présenter une déformation élastique suffisante pour assumer la fonction d'étanchéité vis-à-vis de la parclose 41, mais ausi, d'autre part, posséder une résistance à la compression et une dureté convenables, afin que les bossages 38 puissent transmettre la pression d'application. Le matériau déjà mentionné, connu sous la dénomination de THIOKOL, avec une résistance à la compression de 120 à 140 N/cm², un allongement élastique de 100% environ et une dureté de 55 degrés Shore A, répond de façon suffisante à ces exigences.

## Revendications

1. Procédé de fabrication d'un vitrage isolant muni d'une garniture de protection des arêtes (5, 9) sur son pourtour, du type selon lequel une matière plastique injectable et durcissable est appliquée en même temps dans la gorge (8) constituée par les faces internes des deux vitres individuelles (1 et 2) et par la cale d'espacement (3), et, extérieurement, tout autour de la tranche marginale du vitrage isolant, grâce à la mise en place, sur les faces externes du vitrage isolant, de deux gabarits (6, 7) s'étendant légèrement au-delà de la périphérie desdites faces, définissant ainsi une cavité (8) de section calibrée, englobant la tranche des feuilles de verre, le remplissage de cette cavité (8) étant effectué par de la matière plastique durcissable (9), et les gabarits (6, 7) étant retirés après le durcissement de la matière plastique, caractérisé en ce que les deux gabarits (6, 7) sont munis au niveau de la périphérie de la face externe de leur feuille de verre homologue, d'un évidement (10) correspondant au contour extérieur souhaité de la garniture de protection des arêtes et que le remplissage de la cavité (8) de section et des évidements (10) dans les gabarits (6,7) par la matiere plastique (9) s'effectue à l'aide d'une buse d'injection (18) obturrant la cavité (8) et les évidements (10) vers l'extérieur, et se déplaçant en prenant appui sur les chants desdits gabarits (6, 7).

2. Procédé selon la revendication 1, caractérisé en ce que la cavité (8) est remplie d'une matière plastique du groupe des alkylsulfures, élastique, thermoplastique, de type caoutchouc.

3. Dispositif pour la mise en œuvre du pro-

cédé selon la revendication 1, caractérisé par deux gabarits (6, 7), en forme de plaques ou de chassis, pouvant être bloqués contre les deux vitres individuelles (1, 2) du vitrage isolant, et comportant des évidements marginaux (10) correspondant au contour extérieur (25) du profilé de protection des arêtes (5).

4. Dispositif selon la revendication 3, caractérisé en ce que les gabarits (6, 7), sont constitués d'un matériau transparent.

5. Dispositif selon les revendication 3 ou 4, caractérisé en ce que les gabarits (6 et 7), sur leur surface offerte au contact de la matière plastique, sont munis d'une couche (11) anti-adhésion interdisant le collage de la matière plastique.

6. Dispositif selon les revendications 3 à 5, caractérisé en ce que les gabarits (6, 7), sur leurs surfaces au contact des vitres (1, 2), sont munis de canaux (13), qu'on peut raccorder à une pompe à dépression.

7. Dispositif selon les revendications 3 à 5, caractérisé en ce que les gabarits (6, 7) présentent des parties ferromagnétiques et sont appliqués par des forces magnétiques contre le vitrage isolant.

8. Dispositif selon les revendications 3 à 5, caractérisé en ce que les gabarits (6, 7) sont munis de moyens mécaniques pour les rendre solidaires.

9. Dispositif pour la mise en œuvre du procédé selon la revendication 1, caractérisé par une buse d'injection (18), comportant des plaques de guidage (22) minces, en saillie sur la surface d'appui (19), qui sont disposées parallèlement entre elles, à une distance (B) correspondant à celle des surfaces des gabarits (6, 7) délimitant les évidements (10).

10. Vitrage muni d'une garniture de protection périphérique des arêtes constituée d'une matière plastique conservant une notable élasticité dans le temps, et servant de dispositif d'étanchéïté lors de la mise en place dans un châssis de fenêtre, caractérisé en ce que la garniture élastique (5) de protection des arêtes englobe la tranche des feuilles de verre et présente des bossages localisés (37, 38) sur l'une de des ailes (36) anglobant la tranche des feuilles de verre, destinés à s'appliquer contre l'une des parcloses (41, 42) de maintien du châssis de fenêtre (40).

11. Vitrage selon la revendication 10, caractérisé en ce que les bossages localisés (37, 38) sont distribués à écartement de 10 à 70 cm sur tout le pourtour de la garniture de protection des arêtes (5).

12. Vitrage selon l'une des revendications 10 ou 11, caractérisé en ce que les bossages (37, 38) présentent une surface de base de 0,5 à cm$^2$ et une hauteur de 0,25 à 2 mm.

13. Vitrage selon l'une des revendications 10 à 12, caractérisé en ce que les bossages (37, 38) s'étendent depuis l'arête inférieure (39) jusqu'à l'arête supérieure de l'aile (36) de la garniture de protection des arêtes (5).

14. Vitrage selon l'une des revendications 10 à 13, caractérisé en ce que les bossages (38) présentent une forme de coin aplati dont la hauteur croît, en biseau, depuis l'arête inférieure (39) de l'aile (36) jusqu'à l'arête supérieure.

15. Vitrage selon l'une des revendications 10 à 14, caractérisé en ce que la garniture de protection des arêtes (5) enveloppe un vitrage isolant constitué de deux ou plusieurs vitres (1, 2) et d'une ou plusieurs cales d'espacement (3) disposées entre celles-ci.

16. Vitrage selon la revendication 15, caractérisé en ce que le matériau de la garniture de protection des arêtes (5) sert en même temps de matériau de scellement dans la gorge formée par la face extérieure de la cale d'espacement (3) et par les surfaces latérales se faisant face des vitres (1, 2).

17. Procédé de fabrication d'un vitrage selon l'une des revendications 10 à 16, caractérisé en ce que la garniture de protection des arêtes (5) est constituée d'une matière plastique injectable, susceptible de prise en conservant une notable élasticité, qui est injectée dans une cavité (8) de section calibrée, entourant la zone des arêtes, ladite cativé (8) étant formée par mise en place, sur le vitrage, de deux gabarits (6, 7) munis, à la périphérie de leur surface au contact du vitrage, d'évidements (10) correspondant au contour extérieur souhaité de la garniture (5) de protection des arêtes, l'un des évidements (10) comportant l'empreinte desdits bossages (37, 38), et les gabarits (6, 7) étant enlevés la prise de la matière plastique.

**Patentansprüche**

1. Verfahren zum Herstellen einer mit einem umlaufenden Kantenschutzüberzug (5, 9) versehenen Isolierglasscheibe, bei dem ein spritzfähiger und aushärtender Kunststoff gleichzeitig in die von den inneren Oberflächen an beiden Einzelglasscheiben (1, 2) und von dem Abstandsrahmen (3) gebildete Hohlkehle, und außen um den Randbereich der Isolierglasscheibe herum aufgebracht wird, indem auf die Außenflächen der Isolierglasscheibe zwei Schablonen (6, 7) aufgelegt werden, die sich geringfügig bis über den Umfang der Außenflächen hinaus erstrecken und so einen den Randbereich der Glasscheiben umgebenden Hohlraum (8) mit kalibriertem Querschnitt bilden, dieser Hohlraum (8) mit dem aushärtenden Kunststoff (9) ausgefüllt, und nach dem Aushärten des Kunststoffs die Schablonen (6, 7) entfernt werden, dadurch gekennzeichnet, daß die beiden Schablonen (6, 7) auf der Höhe des Randbereichs der äußeren Seite der jeweils zugeordneten Glasscheibe mit einer Aussparung (10) versehen sind, die der gewünschten Außenkontur des Kantenschutzüberzugs entspricht, und daß das Ausfüllen des Hohlraums (8) mit kalibriertem Querschnitt und der Ausnehmungen (10) in den Schablonen (6, 7) mit der Kunststoffmasse (9) mit Hilfe einer Spritzdüse (18) vorgenommen wird, die den Hohlraum (8) und die Ausnehmungen (10) nach außen hin verschließt und unter Abstützung auf den Umfangsflächen der Schablonen (6, 7) verschoben wird.

2.Verfahren nach Anspruch 1, dadurch gekennzeichnet, daß der Hohlraum (8) mit einem elastischen, thermoplastischen kautschukähnlichen Kunststoff der Alkylpolysulfidgruppe gefüllt wird.

3. Vorrichtung zur Durchführung des Verfahrens nach Anspruch 1, gekennzeichnet durch zwei platten- oder rahmenförmige, gegen die beiden Einzelglasscheiben (1, 2) der Isolierglasscheibe verspannbare Schablonen (6, 7) mit der Außenkontur (25) des Kantenschutzprofils (5) entsprechenden Randausnehmungen (10).

4. Vorrichtung nach Anspruch 3, dadurch gekennzeichnet, daß die Schablonen (6, 7) aus durchsichtigem Werkstoff bestehen.

5. Vorrichtung nach Anspruch 3 oder 4, dadurch gekennzeichnet, daß die Schablonen (6, 7) auf der dem Kontakt mit dem Kunststoff ausgesetzten Oberfläche mit einer die Haftung an dem Kunststoff verhindernden Trennschicht (11) versehen sind.

6. Vorrichtung nach Anspruch 3 bis 5, dadurch gekennzeichnet, daß die Schablonen (6, 7) auf den an den Glasscheiben (1, 2) anliegenden Flächen mit Kanälen (13) versehen sind, die an eine Unterdruckpumpe anschließbar sind.

7. Vorrichtung nach Anspruch 3 bis 5, dadurch gekennzeichnet, daß die Schablonen (6, 7) ferromagnetische Teile aufweisen und durch Magnetkräfte gegen die Isolierglasscheibe gepreßt werden.

8. Vorrichtung nach Anspruch 3 bis 5, dadurch gekennzeichnet, daß die Schablonen (6, 7) zum Festlegen mit mechanischen Mitteln versehen sind.

9. Vorrichtung zur Durchführung des Verfahrens nach Anspruch 1, gekennzeichnet durch eine Spritzdüse (18) mit aus der Glättfläche (19) vorstehenden dünnen Führungsblechen (22), die parallel zueinander im Abstand (B) angeordnet sind, der dem Abstand der die Ausnehmungen (10) begrenzenden Flächen der Schablonen entspricht.

10. Glasscheibe mit einem umlaufenden Kantenschutzüberzug aus einem dauerelastischen Kunststoff, der als Dichtung beim Einsetzen in den Fensterrahmen dient, dadurch gekennzeichnet, daß der elastische Kantenschutzüberzug (5) den Randbereich der Glasscheibe umgibt und auf einem seiner den Randbereich der Glasscheibe übergreifenden Stege (36) mit lokal begrenzten Erhebungen (37, 38) versehen ist, die sich gegen eine der Glashalteleisten (41, 42) des Fensterrahmens (40) abstützen.

11. Glasscheibe nach Anspruch 10, dadurch gekennzeichnet, daß die lokal begrenzten Erhebungen (37, 38) über den gesamten Umfang des Kantenschutzüberzugs verteilt in Abständen von 10 bis 70 cm angeordnet sind.

12. Glasscheiben nach einem der Ansprüche 10 oder 11, dadurch gekennzeichnet, daß die lokalen Erhebungen (37, 38) eine Grundfläche von 0,5 bis 4 cm², und eine Höhe von 0,25 bis 2 mm aufweisen.

13. Glasscheibe nach einem der Ansprüche 10 bis 12, dadurch gekennzeichnet, daß die lokalen Erhebungen (37, 38) sich von der unteren Kante (39) bis zur oberen Kante (36) des Steges (6) des Kantenschutzüberzugs (5) erstrecken.

14. Glasscheibe nach einem der Ansprüche 10 bis 13, dadurch gekennzeichnet, daß die Erhebungen (38) eine abgeflachte Keilform aufweisen, deren Höhe von der unteren Kante (39) des Steges (6) bis zur oberen Kante hin schräg zunimmt.

15. Glasscheibe nach einem der Ansprüche 10 bis 14, dadurch gekennzeichnet, daß der Kantenschutzüberzug (5) eine aus zwei oder mehr Glasscheiben (1, 2) und einem oder mehreren dazwischenliegenden Abstandsrahmen (3) bestehende Isolierglasscheibe umgibt.

16. Glasscheibe nach Anspruch 15, dadurch gekennzeichnet, daß das Material des Kantenschutzüberzugs (5) gleichzeitig als Versiegelungsmaterial in der von der Außenseite des Abstandsrahmens (3) und von den einander zugekehrten Randflächen der Glasscheiben (1, 2) gebildeten Hohlkehle dient.

17. Verfahren zur Herstellung einer Glasscheibe nach einem der Ansprüche 10 bis 16, dadurch gekennzeichnet, daß der Kantenschutzüberzug (5) aus einem spritzfähigen aushärtenden dauerelastischen Kunststoff besteht, der in den den Randbereich umgebenden Hohlraum (8) eingespritzt wird, wobei der Hohlraum (8) durch das Anlegen von zwei Schablonen (6, 7) an die Glasscheibe gebildet wird und die Schablonen (6, 7) an ihrem Umfang auf der mit der Glasscheibe in Kontakt stehenden Oberfläche der äußeren gewünschten Kontur des Kantenschutzüberzugs (5) entsprechende Ausnehmungen (10) aufweisen, und in einer dieser Ausnehmungen (10) die Vertiefungen für die Erhebungen (37, 38) angebracht sind, und daß die Schablonen (6, 7) nach dem Aushärten des Kunststoffs entfernt werden.

**Claims**

1. A method of making an insulating glazing unit provided with a member for protecting the edges (5, 9) at its periphery, of the type in which an injectable hardenable plastics material is applied at the same time in the groove (8) formed by the interior faces of two individual panes (1 and 2) and by the spacing block (3) and, exteriorly, around the whole marginal edge part of the glazing unit, by means of mounting in place, on the exterior surfaces of the insulating pane, two jigs (6, 7) extending slightly beyond the periphery of said surfaces, thus defining a cavity (8) of given cross-section surrounding the edge part of the glass sheets, filling of this cavity (8) being carried out using hardenable plastics material (9) and the jigs (6, 7) being withdrawn after hardening of the plastics material, characterised in that the two jigs (6, 7) are provided at the level of the periphery of the exterior surface of their respective glass sheet with an opening (10) corresponding to the desired exterior contour of the member for protecting the edges, and in that filling of the cavity (8) of given cross-section and of the openings (10) in the jigs (6, 7) by the plastics material (9) is carried out by means of an injection nozzle (18) obturating the cavity (8) and the openings (10) towards the exterior, and moving while making contact with the edges of said jigs (6, 7).

2. A method according to claim 1, characterised in that the cavity (8) is filled with a plastics material of the alkylpolysulphide group which is elastic, thermoplastic and of the rubber type.

3. A device for carrying out a method according to claim 1, characterised by two jigs (6, 7), shaped as plates or frames which may be held against the two individual panes (1, 2) of the insulating glazing unit, and comprising marginal openings (10) corresponding to the exterior contour (25) of a section member for protecting the edges (5).

4. A device according to claim 3, characterised in that the jigs (6, 7) are formed of a transparent material.

5. A device according to claim 3 or 4, characterised in that the jigs (6 and 7), on their surface offered for contact with the plastics material, are provided with an anti-adhesion layer (11) preventing adhesion to the plastics material.

6. A device according to claims 3 to 5, characterised in that the jigs (6, 7), at their surfaces in contact with the panes (1, 2) are provided with ducts (13) which may be connected to a pump for generating reduced pressure.

7. A device according to claims 3 to 5, characterised in that the jigs (6, 7) have ferromagnetic parts and are urged by magnetic forces against the insulating glazing unit.

8. A device according to claims 3 to 5, characterised in that the jigs (6, 7) are provided with mechanical means for holding them in place.

9. A device for carrying out a method according to claim 1, characterised by an injection nozzle (18) comprising thin guide plates (22) extending on the contact surface (19) which are arranged parallel to each other, at a distance (B) corresponding to that of the surfaces of the jigs (6, 7) defining the openings (10).

10. A glazing unit provided with a peripheral member for protecting its edges formed of a plastics material retaining a significant elasticity over a period of time, and acting as a gas-tight device when mounted in place in a window frame, characterised in that the elastic member (5) for protecting the edges surrounds the edges of the glass sheets and has localized protrusions (37, 38) on one of its wings (36) surrounding the edge of the glass sheets, intended to be applied against one of the holding members (41, 42) of the window frame (40).

11. A pane according to claim 10, characterised in that the localized protrusions (37, 38) are distributed at a separation from 10 to 70 cm over the whole periphery of the member for protecting the edges (5).

12. A pane according to one of claims 10 and 11, characterised in that the protrusions (37, 38) have a base surfase area from 0,5 to 4 cm² and a height from 0,25 to 2 mm.

13. A pane according to one of claims 10 to 12, characterised in that the protrusions (37, 38) extend from the lower edge (39) to the upper edge of the wing (36) of the member for protecting the edges (5).

14. A pane according to one of claims 10 to 13, characterised in that the protrusions (38) are shaped as flattened wedges of which the height increases, bevelled, from the lower edge (39) of the wing (36) to the upper edge.

15. A pane according to one of claims 10 to 14, characterised in that the member for protecting the edges (5) envelopes an insulating glazing unit formed of two or more panes (1, 2) and one or more spacing blocks (3) arranged between them.

16. A pane according to claim 15, characterised in that the material of the member for protecting the edges (5) serves also as a sealing material in the groove formed by the exterior surface of the spacing block (3) and by the lateral surfaces of the panes (1, 2) facing each other.

17. A method of making a glazing unit according to one of claims 10 to 16, characterised in that the member for protecting the edges (5) is formed of an injectable plastics material, capable of setting while retaining a significant elasticity, which is injected into a cavity of given cross-section (8) surrounding the zone of the edges, said cavity (8) being formed by mounting in place, on the glazing unit, of two jigs (6, 7) provided at the periphery of their surface in contact with the pane with openings (10) corresponding to the desired exterior contour of the member (5) for protecting the edges, one of the openings (10) comprising the imprint of said protrusions (37, 38) and the jigs (6, 7) being removed after setting of the plastics material.

Fig.1

0 069 021

## Fig. 2

13  13

2  1

7  6
13  13
3
11  11
A  8
20  10  8  10  20
B'

## Fig. 3

13  13

2  1

7  6
13  13
3
11  11
20  9(5)  20

## Fig. 4

2  1

3
25  25
5

Fig:5

Fig. 6

Fig. 8

Fig. 7

*Fig. 9*